**Europäisches Patentamt**

**European Patent Office**

**Office européen des brevets**

(19)

(11) Veröffentlichungsnummer: **0 198 250**
**B1**

(12) **EUROPÄISCHE PATENTSCHRIFT**

(45) Veröffentlichungstag der Patentschrift:
06.12.89

(21) Anmeldenummer: **86103605.1**

(22) Anmeldetag: **18.03.86**

(51) Int. Cl.⁴: **H 02 K 9/19,** H 02 K 5/12,
H 02 K 9/04

(54) **Hydraulisches Motor-Pumpen-Aggregat.**

(30) Priorität: **15.04.85 DE 3513472**

(43) Veröffentlichungstag der Anmeldung:
**22.10.86 Patentblatt 86/43**

(45) Bekanntmachung des Hinweises auf die Patenterteilung:
**06.12.89 Patentblatt 89/49**

(84) Benannte Vertragsstaaten:
**AT BE CH DE FR GB IT LI LU NL SE**

(56) Entgegenhaltungen:
**DE-A-2 353 398**
**DE-A-2 825 454**
**DE-A-2 854 519**
**DE-A-2 936 669**
**DE-A-3 109 621**
**DE-U-7 527 405**
**FR-A-1 091 246**
**GB-A-2 029 505**
**US-A-1 960 576**
**US-A-2 822 123**
**US-A-3 675 057**

**PATENT ABSTRACTS OF JAPAN, Band 5, Nr. 103 (E-
64) 775 , 3. Juli 1981; & JP - A - 56 44363**

(73) Patentinhaber: **HEILMEIER & WEINLEIN Fabrik für
Oel- Hydraulik GmbH & Co. KG, Neumarkter
Strasse 26, D-8000 München 80 (DE)**

(72) Erfinder: **Obering, Rudolf Brunner, Wankstrasse 23,
D-8011 Baldham (DE)**

(74) Vertreter: **Patentanwälte Grünecker, Kinkeldey,
Stockmair & Partner, Maximilianstrasse 58,
D-8000 München 22 (DE)**

Beschreibung

Die Erfindung betrifft ein hydraulisches Motor-Pumpen-Aggregat gemäß Oberbegriff des Patentanspruchs 1.

Bei einem aus der DE-A-2 936 669 bekannten hydraulischen Motor-Pumpen-Aggregat ist kein Dauerbetrieb möglich, weil die vom Hydrauliköl aufgenommene Wärme des Elektromotors an der Außenseite der Behälterwand unzureichend abgeführt wird. Der Übergang von der Außenseite der Behälterwand zur Umgebung stellt eine natürliche Schwelle in der Wärmeabfuhr dar. Eine Überhitzung des Hydrauliköls führt zu Schäden, die die Funktionssicherheit des Aggregats gefährden. Das Aggregat muß intermittierend betrieben werden, so daß in Betriebspausen die Wärmeabfuhr ausreicht, die Betriebstemperatur unterhalb eines kritischen Werts zu halten.

Aus der DE-A-2 854 519 ist ein pneumatisches Motor-Verdichter-Aggregat bekannt, bei dem zur Schmierung und zur Wärmeabfuhr des Kolbenverdichters vorgesehenes Schmieröl einen Teil des Gehäuses des Elektromotors ausfüllt, und bei dem auf dem Gehäuse des Elektromotors ein Kühlgebläse angeordnet ist, das von der Abtriebswelle des Elektromotors getrieben wird und das Gehäuse des Elektromotors kühlt. Sobald der Elektromotor läuft, kühlt das Kühlgebläse das Gehäuse, unabhängig von den tatsächlichen Temperaturverhältnissen innerhalb und außerhalb des Gehäuses. Bei kalter Umgebung erreicht das Schmieröl seine Betriebstemperatur sehr spät oder gar nicht.

Der Erfindung liegt die Aufgabe zugrunde, ein hydraulisches Motor-Pumpen-Aggregat der eingangs genannten Art zu schaffen, das mit gutem Wirkungsgrad für Dauerbetrieb geeignet ist.

Die gestellte Aufgabe wird erfindungsgemäß mit den im kennzeichnenden Teil des Patentanspruchs 1 angegebenen Merkmalen gelöst.

Bei dieser Ausbildung wird erreicht, daß das Öl im Aggregat schnell auf die optimale Betriebstemperatur gelangt, weil das Kühlgebläse zunächst nicht angetrieben wird. Danach hält das temperaturabhängig an- und abgeschaltete Kühlgebläse eine optimale Öltemperatur aufrecht, die für die versorgten Hydraulikeinrichtungen, für das Öl selbst und vor allen für den Elektromotor zweckmäßig ist. Das Kühlgebläse wird zugeschaltet, wenn die Öltemperatur oder die Ölbehältertemperatur dies als angeraten erscheinen lassen. Da der Elektromotor auch mit Überlast betrieben werden kann, nutzt das Aggregat die eingesetzte Energie gut aus. Das Aggregat ist nahezu unabhängig von äußeren Einflüssen, weil es sich selbsttätig an veränderte Bedingungen anzupassen vermag. Sind die Umgebungstemperaturen beispielsweise sehr niedrig, so daß das Wärmegefälle an der Oberfläche des Ölbehälters für eine ausreichende Kühlung genügt, so wird das Kühlgebläse überhaupt nicht in Gang gesetzt. Herrschen hingegen hohe Umgebungstemperaturen, läuft das Kühlgebläse dauernd.

Gemäß Anspruch 2 braucht wegen des elektrischen Kühlgebläses bei dessen Betrieb die Antriebsleistung des Elektromotors nicht reduziert zu werden, weil das Kühlgebläse über eine eigene Energieversorgung verfügt. Das Kühlgebläse kann auch nachlaufen.

Zweckmäßig ist ferner die Ausführungsform nach Anspruch 3, da der Temperaturfühler an einer hinsichtlich der Wärmebelastung exponierten Stelle des Ölbehälters oder im Öl angebracht werden kann und genau Aufschluß darüber hat, ob es erforderlich ist, das Kühlgebläse laufenzulassen oder nicht. Dadurch wird Energievergeudung vermieden.

Eine zweckmäßige Ausführungsform geht weiterhin aus Anspruch 4 hervor. Bei dieser Ausbildung sorgt der Elektromotor selbst für den Antrieb des Lüfterrades, was allerdings bedeutet, daß nur dann gekühlt werden kann, wenn der Elektromotor läuft. Dies bedeutet aber auch, daß bei intermittierendem Betrieb des Aggregats der Elektromotor und damit das Pumpenelement angetrieben werden müssen, wenn die Öltemperatur oder Ölbehältertemperatur dies erforderlich machen, so daß wegen des im Leerlauf gepumpten Öls ein gewisser Energieaufwand getrieben werden muß, um die Öltemperatur zu reduzieren. Das Lüfterrad ist mit der Pumpenwelle beispielsweise durch eine temperaturabhängige Viskose oder Magnetkupplung verbunden, die das Lüfterrad nur zuschaltet, wenn dies die Temperatur erfordert. Die Kupplung wird in Abhängigkeit von der Öltemperatur oder der Temperatur des Ölbehälters ein- oder ausgeschaltet. Eine weitere Steigerung der Wärmeabfuhr läßt sich mit der Maßnahme von Anspruch 5 erreichen.

Herstellungstechnisch, montagetechnisch und kostengünstig ist ferner die Ausführungsform gemäß Anspruch 6. Je nach der benötigten Füllmenge wird eine bestimmte Länge des Rohrprofils abgeschnitten, das handelsüblich vorliegt.

Schließlich betrifft Anspruch 7 eine, insbesondere bei einem langen Ölbehälter, zweckmäßige Ausführungsform, weil das Kühlgebläse dann die Wärme aus dem Öl besonders wirkungsvoll abführt. Es könnten im übrigen auch an beiden Deckeln Kühlgebläse angeordnet und gleichzeitig oder abwechselnd eingeschaltet sein.

Anhand der Zeichnungen werden Ausführungsformen des Erfindungsgegenstandes erläutert. Es zeigen:

Fig. 1     einen Längsschnitt durch eine erste Ausführungsform eines hydraulischen Motor-Pumpen-Aggregates,

Fig. 2     einen Teil eines Längsschnitts durch eine weitere Ausführungsform und

Fig. 3     einen Teil eines Längsschnitts durch eine dritte Ausführungsform.

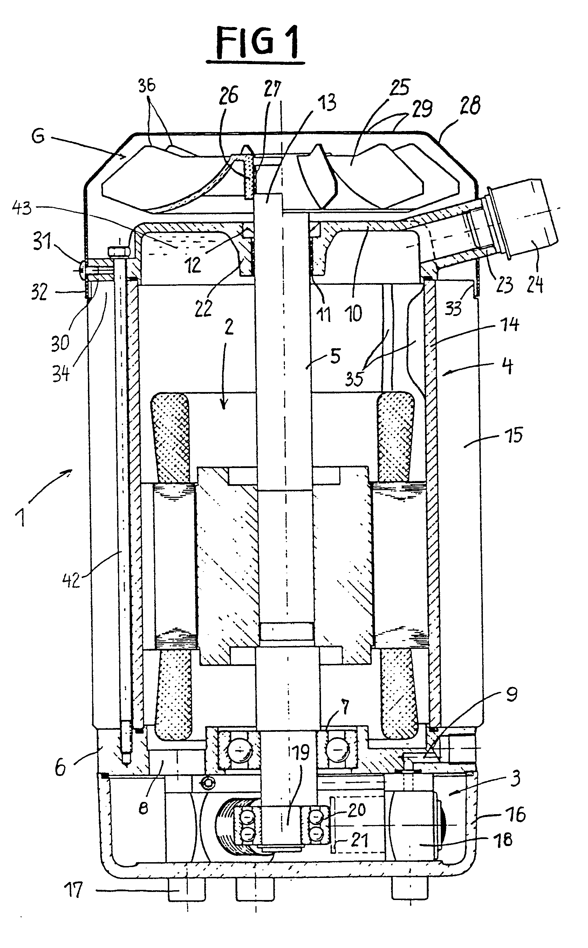

Ein hydraulisches Motor-Pumpen-Aggregat 1 gemäß Fig. 1 enthält einen offenen Elektromotor 2 und wenigstens ein hydraulisches Pumpenelement 3, die zur Zusammenarbeit innerhalb eines allseits geschlossenen Ölbehälters 4 angeordnet sind. Der Elektromotor 2 treibt die Pumpenelemente 3 durch seine Motorwelle 5, die nahe eines Endbereiches in einer Zwischenplatte 6 des Ölbehälters 4 mit einem Wälzlager 7 gelagert ist. Die Zwischenplatte 6 enthält Durchgangsöffnungen 8 für das den Ölbehälter 4 ausfüllende Öl und Druckkanäle 9, die an die Pumpenelemente 3 angeschlossen sind. An die Druckkanäle 9 sind nicht dargestellte Anschlußleitungen angeschlossen.

Der andere Endbereich der Motorwelle 5 ist in einem oberen Deckel 10 des Ölbehälters 4 in einem Gleitlager 11 gelagert, das nach außen durch eine Wellendichtung 12 abgedichtet ist. Die Motorwelle 5 ist über das Gleitlager 11 hinaus verlängert und steht mit einer Verlängerung 13 über den Deckel 10 vor.

Zwischen der Zwischenplatte 6 und dem unteren Deckel 10 erstreckt sich ein im wesentlichen zylindrischer Behälterabschnitt 14, der an seiner Außenseite in Längsrichtung verlaufende Kühlrippen 15 trägt.

Am dem Deckel 10 entgegengesetzten Ende des Ölbehälters 4 ist auf die Zwischenplatte 6 ein Deckel 16 aufgebracht, der mit Befestigungselementen 17 die hydraulischen Pumpenelemente 3 festlegt. Die Motorwelle 5 besitzt in diesem Bereich einen exzentrischen Zapfen 19, der über ein Wälzlager 20 auf Druckplatten 21 einwirkt, die an Pumpenelement-Gehäusen 18 über nicht näher hervorgehobene Federn angeordnet sind. Der Deckel 10 und die Zwischenplatte 6 sind mit dem Behälterabschnitt 14 durch Spannschrauben 42 verbunden. Der Behälterabschnitt 14 ist aus einem endlosen Rohrprofil, das zur Gehäuseherstellung für einen durch den Motoraußendurchmesser bestimmten Elektromotortyp vorgesehen ist, in einer Länge abgeschnitten, die größer ist als die üblicherweise benötigte Länge, um zusätzliches Volumen für die Ölfüllung 43 zu gewinnen.

Der Deckel 10 ist mit einem Nabenteil 22 versehen, der das Gleitlager 11 festhält. Ferner ist im Deckel 10 ein Stutzen 23 angeformt, der zum Befüllen und Entfüllen des Ölbehälters 4 mit einer Ölfüllung 43 dient. Er ist durch eine Kappe 24 verschlossen. Zurückfließendes Öl wird auf nicht gezeigte Weise in den Ölbehälter 4 zurückgeführt.

Auf der Verlängerung 13 der Motorwelle 15 ist ein Lüfterrad 25 mit seinem Nabenteil 26 über einer Kupplung 27 auf der Verlängerung 13 der Motorwelle 5 befestigt.

Das Lüfterrad 25 besitzt radiale Flügel 36 und ist durch einen Schutzdeckel oder -käfig 28 abgedeckt, der Ansaugöffnungen 29 aufweist und auf nach außen vortretenden Vorsprüngen 30 des Deckels 10 mit Befestigungsschrauben 31 festgelegt ist. Ein mit 32 bezeichneter Rand des Deckels 28 greift über die im Bereich 33 abgestuften Enden der Kühlrippen 15, so daß eine einwandfreie Kühlluftführung 34 geschaffen wird, mit der die vom Lüfterrad 25 bewegte Luft gleichmäßig über den gesamten Umfang des Ölbehälters 4 gedrückt wird. An der Innenoberfläche des Ölbehälters 4, insbesondere in seinem Behälterabschnitt 14, können weitere, innenliegende Kühlrippen 35 angeformt sein, mit denen der Wärmeübergang vom Öl im Ölbehälter an die Wand des Ölbehälters 4 verbessert wird.

Beim Betrieb des Aggregats 1 treibt der Elektromotor 2 die Pumpenelemente 3, die das im Ölbehälter 4 enthaltene Öls ansaugen und durch die Druckleitungeng 9 zu nicht dargestellten Verbrauchern pressen. Danach wird das Öl wiederum in den Ölbehälter 4 zurückgeführt. Die Pumpenelemente 3 werden durch den exzentrischen Fortsatz 19 angetrieben. Wird bei der Drehung der Motorwelle 5 das Lüfterrad 25 gedreht, das die Umgebungsluft ansaugt und über die Oberfläche des Ölbehälters 4 führt, wird im Öl enthaltene Wärme nach außen abgeführt und das Öl und mittels des Öls auch der Elektromotor auf einer zweckmäßig niedrigen Temperatur gehalten.

Denkbar wäre es auch, die Motorwelle an dem dem Lüfterrad 25 abgewandten Ende durch den Deckel 16 nach außen zu führen und dort das Lüfterrad 25 oder ein zusätzliches Lüfterrad anzubringen. Ferner könnte der Deckel 28 so weit vergrößert werden, daß er über einen größeren Längsabschnitt der außenliegenden Kühlrippen 15 reicht. Die Flügel 36 könnten auch eine gekrümmte Form oder eine schräge Anstellung am Lüfterrad 25 haben. Das Lüfterrad 25 ist mit einer Kupplung auf der Verlängerung 13 angebracht, wobei die Kupplung (Viskose-oder Magnetkupplung) in Abhängigkeit von der Öl- oder Behältertemperatur ein- oder ausgerückt wird, so daß das Lüfterrad tatsächlich nur läuft, wenn die Kühlung benötigt wird. Bei sehr niedrigen Außentemperaturen oder bei Inbetriebnahme des Aggregats steht das Lüfterrad.

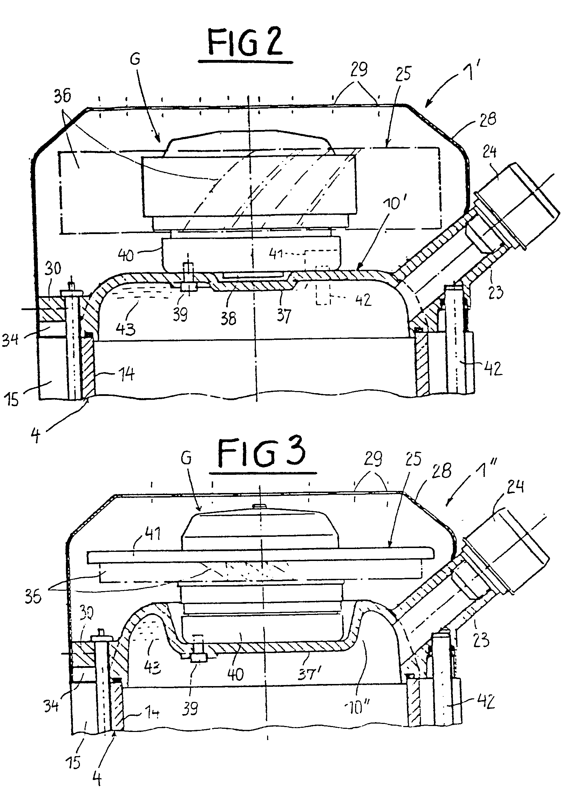

Bei den Ausführungsformen der Fig. 2 und 3 (es ist jeweils nur der obere Teil des Aggregates 1' bzw. 1" gezeigt) ist die nicht-dargestellte Welle des Elektromotors nicht durch den Deckel 10' bzw. 10" nach außen verlängert sondern auf dem Deckel 10- bzw. 10" ist ein eigenes, elektrisches Kühlgebläse G mit einem einen Antriebsmotor angebracht. Bei langem Ölbehälter 4 könnte das Kühlgebläse G auch am unteren, pumpenseitigen Deckel sitzen.

Bei der Ausführungsform gemäß Fig. 2 sitzt ein Gehäuse 40 des Kühlgebläses G mit einem Vorsprung 38 in einer Vertiefung 37 des Deckels 10' und wird durch Schrauben 39 festgehalten. In Gehäuse 40 ist zweckmäßigerweise eine strichliert angedeutete Einund Ausschaltvorrichtung 41 vorgesehen, die mit einen Temperaturfühler 42 in Schaltverbindung steht, der entweder die Temperatur der Wand des Deckels 10' des Ölbehälters 4 oder die Temperatur der Ölfüllung 43 im Ölbehälter überwacht und die Ein- und Ausschaltvorrichtung 41 je nach Bedarf betätigt. Es wird dadurch erreicht, daß das Kühlgebläse G nur dann läuft, wenn tatsächlich gekühlt werden muß. Bei Inbetriebnahme bzw. bei Anlauf des Aggregates 1' steht das Kühlgebläse G trotz des laufenden Elektromotors bis zum Erreichen der Betriebstemperatur. Bei intermittierendem Betrieb des Elektromotors kann hingegen das Kühlgebläse G nach Abschalten des Elektromotors weiterlaufen, bis die Öltemperatur bzw. die Temperatur des Ölbehälters 4 auf ein gewünschtes Maß reduziert worden ist. Denkbar ist ferner, mit der Ein- und Ausschaltvorrichtung 41 eine Regelvorrichtung zu vereinigen, die die Leistung des Kühlgebläses G abhängig vom Temperaturanstieg bzw. der Temperatur so regelt, daß mit zunehmender Temperatur das Kühlgebläse G mit zunehmender Leistung arbeitet. Es ist auf diese Weise eine nahezu ideale Anpassung der Kühlleistung an wechselnde Betriebsbedingungen des Aggregates gegeben.

Bei der Ausführungsform von Fig. 3 ist wiederum im Gehäuse 40 des Kühlgebläses G die Ein- und Ausschaltvorrichtung und ist ferner wenigstens ein Temperaturfühler vorgesehen, die allerdings nicht dargestellt sind. Das Kühlgebläse verfügt über einen eigenen Antrieb und kann wie bei der Ausführungsform von Fig. 2 betrieben werden. Der Deckel 10" besitzt eine relativ ausgeprägte Vertiefung 37', in der das Kühlgebläse G mit seinem Gehäuse 40 versenkt angebracht ist, was den Außenabmessungen des Aggregates 1" zugutekommt. Die Lüfterflügel 36 sind lamellenartig aus einer Blechscheibe 41 ausgeklinkt oder herausgestanzt und nach unten gebogen. Der andere Aufbau der Aggregate 1' und 1" gemäß den Fig. 1 und 2 entspricht dem von Fig. 1. Unterschiedlich ist nur noch, daß der Schutzdeckel bzw. -käfig 28 stumpf an die Enden der Kühlrippen 15 anstößt. Die Aggregate 1' und 1" arbeiten genauso wie das anhand von Fig. 1 beschriebene Aggregat 1.

**Patentansprüche**

1. Hydraulisches Motor-Pumpen-Aggregat (1, 1', 1") mit einem aus zumindest zwei Miteinander verschraubten Teilen bestehenden Ölbehälter (4), der mit einem Vorrat (43) an Hydrauliköl befüllt ist, das mittels wenigstens eines im Ölbehälter angeordneten Pumpenelementes (18) in eine Anschlußleitung gepumpt wird, mit einem im Ölbehälter unterhalb des Füllniveaus relativ zur Behälterwand fest angeordneten, offenen Elektromotor (2) und mit in der Behälterwand angeordneten Aus- und Einlässen für das Öl, *dadurch gekennzeichnet,* daß der Ölbehälter (4) aus einem an beiden Enden durch Deckel (10, 10', 10"; 6, 16) verschlossenen Abschnitt (14) eines Rohrprofils besteht, an dessen Innenwand der Elektromotor (2) mit seinem Stator und unmittelbar festgelegt ist, daß der Abschnitt (14) zur Unterbringung des Ölvorrats (43) axial länger ist als durch die axiale Länge des Elektromotors (2) erforderlich, daß außen auf wenigstens einem der Deckel zur Reduzierung der Öltemperatur ein die Außenoberfläche des Ölbehälters beaufschlagendes Kühlgebläse (G) mit einem Lüfterrad (25) angeordnet ist, und daß für das Kühlgebläse (G) eine betriebstemperaturabhängige Ein- und Ausschaltvorrichtung (41) vorgesehen ist.

2. Hydraulisches Motor-Pumpen-Aggregat nach Anspruch 1 *gekennzeichnet durch* ein elektrisches Kühlgebläse (G).

3. Hydraulisches Motor-Pumpen-Aggregat nach den Ansprüchen 1 und 2, *dadurch gekennzeichnet,* daß ein die Temperatur des Ölbehälters (4) oder/und der Ölfüllung (43) überwachender Temperaturfühler (42) vorgesehen und mit der Ein- und Ausschaltvorrichtung (41) verbunden ist.

4. Hydraulisches Motor-Pumpen-Aggregat nach Anspruch 1, wobei der Elektromotor (2) das Pumpenelement (8) über eine Welle (5) antreibt, die im Ölbehälter (4) gelagert ist, *dadurch gekennzeichnet,* daß die Welle (5) durch den Deckel (10, 16, 10', 10", 6) hindurch verlängert und das Lüfterrad (25) über eine Kupplung am außenliegenden Wellenende angeordnet ist.

5. Hydraulisches Motor-Pumpen-Aggregat nach Anspruch 1 *dadurch gekennzeichnet,* daß der Abschnitt (14) an seiner Innenoberfläche Rippen (35) trägt.

6. Hydraulisches Motor-Pumpen-Aggregat nach Anspruch 1 *dadurch gekennzeichnet,* daß der Abschnitt (14) aus einem endlos hergestellten Rohrprofil abgelängt ist.

7. Hydraulisches Motor-Pumpen-Aggregat nach Anspruch 1, *dadurch gekennzeichnet,* daß das Kühlgebläse (G) am dem Pumpenelement (18) benachbarten Deckel (16) angebracht ist.

**Revendications**

1. Groupe moto-pompe hydraulique (1, 1', 1") avec un réservoir d'huile (4) constitué par au moins deux parties vissées ensemble, qui est rempli d'une réserve d'huile hydraulique (43) qui est pompée par une conduite de raccordement à au moins un élément de pompe (18) disposé dans le réservoir d'huile, avec un moteur électrique (2) disposé fixe dans le réservoir d'huile, en-dessous du niveau de remplissage évalué par rapport à la paroi du réservoir, avec des entrées et des sorties pour l'huile disposées dans la paroi du réservoir (4), caractérisé en ce que le réservoir d'huile est constitué par un segment (14) d'un profilé tubulaire fermé aux deux extrémités par des couvercles (10, 10', 10"; 6, 16), sur la paroi intérieure duquel le moteur électrique (2) est fixé directement par son stator, de telle sorte qu'il est nécessaire au segment (14), pour loger la réservé d'huile (43) d'avoir une longueur axiale supérieure à la longueur axiale du moteur électrique (2), en ce qu'il est disposé extérieurement sur au moins un des couvercles, afin de réduire la température de l'huile, un ventilateur (G) avec une roue (25) exerçant son effet sur la surface extérieure du réservoir d'huile et en ce qu'il est prévu pour le ventilateur (G) un dispositif de bran chement et de débranchement (41) en fonction de la température de service.

2. Groupe moto-pompe hydraulique selon la revendication 1, caractérisé par un ventilateur électrique (G).

3. Groupe moto-pompe hydraulique selon les revendications 1 et 2, caractérisé en ce qu'il est prévu une sonde de température (42) surveillant la température du réservoir d'huile (4) ou/et du remplissage d'huile (43) et qui est reliée au dispositif de branchement et de débranchement (41).

4. Groupe moto-pompe hydraulique selon la revendication 1, sur lequel le moteur électrique (2) entraîne l'élément de pompe (18) au moyen d'un arbre (5), qui est monté dans le réservoir d'huile (4), caractérisé en ce que l'arbre (5) se prolonge à travers les couvercles (10, 16, 10', 10", 6) et en ce que la roue de ventilateur (25) est disposée au moyen d'un accouplement à l'extrémité d'arbre situé a l'extérieur.

5. Groupe moto-pompe hydraulique selon la revendication 1, caractérisé en ce que le segment (14) comporte des ailettes 35 sur sa surface intérieure.

6. Groupe moto-pompe hydraulique selon la revendication 1, caractérisé en ce que le segment (14) est sectionné à longueur dans un profilé tubulaire.

7. Groupe moto-pompe hydraulique selon la revendication 1, caractérisé en ce que le ventilateur (G) est fixé sur le couvercle voisin de l'élément de pompe (18).

## Claims

1. A hydraulic motor and pump set (1, 1', 1") having an oil tank (4) which comprises at least two screwed-together parts and which is filled with a supply (43) of hydraulic oil pumped into a connecting line by means of at least one pump element (18) disposed in the oil tank, an open electric motor (2) being fixedly disposed in the oil tank relatively to the wall thereof below the filling level, the tank wall being formed with outlets and inlets for the oil, characterised in that the oil tank (4) is in the form of a portion (14) of a tubular section, such portion being closed at both ends by covers (10, 10', 10"; 6, 16), the electric motor (2) being secured by way of its stator and directly to the tube section inner wall, to receive the oil supply (43) the portion (14) is longer axially than the axial length of the electric motor (2) makes necessary, to reduce the oil temperature at least one of the covers has disposed on its exterior a cooling fan (6) which has a fan rotor (25) and acts on the oil tank outside surface, and on/off cycling means (41) which operate in dependence upon the working temperature are provided for the fan (G).

2. A set according to claim 1, characterised by an electric fan (G).

3. A set according to claims 1 and 2, characterised in that a temperature sensor (42) monitoring the temperature of the oil tank (4) and/or filling (43) is provided and is connected to the on/off cycling means (41).

4. A set according to claim 1, the electric motor driving the pump element (8) by way of a shaft (5) mounted in the oil tank (4), characterised in that the shaft (5) extends through the cover (10, 16, 10', 10", 6) and the fan rotor (25) is disposed with the interposition of à coupling at the outwards end of the shaft.

5. A set according to claim 1, characterised in that the portion (14) has ribs (35) on its inside surface.

6. A set according to claim 1, characterised in that the portion (14) is parted off from an endlessly produced tubular section.

7. A set according to claim 1, characterised in that the fan (G) is disposed on the cover (16) adjacent the pump element (18).

# FIG 1

FIG 2

FIG 3